# EUROPEAN PATENT SPECIFICATION

(11) **EP 3 584 201 B1**
(45) Date of publication and mention of the grant of the patent: **13.09.2023**
(21) Application number: 18754889.6
(22) Date of filing: 24.01.2018
(51) Int. Cl.: B65G 15/08, B65G 15/60, B65G 45/26, B65G 45/18, B65G 45/22, B65G 45/24

(54) **AIR FLOATING BELT CONVEYOR APPARATUS**
LUFTGELAGERTE BANDFÖRDERVORRICHTUNG
DISPOSITIF TRANSPORTEUR À COURROIE À AIR

(30) Priority: 15.02.2017 JP 2017025634
(43) Date of publication of application: 25.12.2019
(73) Proprietor: Kawasaki Jukogyo Kabushiki Kaisha, Kobe-shi, Hyogo 650-8670 (JP)
(72) Inventor: ODAGIRI, Takashi, Kobe-shi, Hyogo 650-8670 (JP)
(74) Representative: Dehns
(86) International application number: PCT/JP2018/002050
(87) International publication number: WO 2018/150817

(56) References cited:
- JP-A- H 115 615
- JP-A- H1 111 642
- JP-A- H1 111 642
- JP-A- H08 290 813
- JP-A- H09 226 918
- JP-A- 2000 062 928
- JP-A- 2001 088 923
- JP-A- 2001 259 558
- JP-A- 2001 294 313
- JP-A- 2003 261 213
- JP-A- 2016 124 633

## Description

### Technical Field

The present invention relates to an air floating belt conveyor apparatus configured to convey bulk materials, such as coal.

### Background Art

As a belt conveyor apparatus configured to smoothly convey bulk materials (hereinafter referred to as "conveyed materials"), such as coal, gypsum, and wet ash in thermal power plants, and iron ore and auxiliary raw materials in iron mills, an air floating belt conveyor apparatus effective for countermeasures against dust and noise is known in recent years. PTL 1 describes one example of the air floating belt conveyor apparatus.

In the air floating belt conveyor apparatus described in PTL 1, gutter-shaped troughs are provided at respective carrier and return routes of a conveyor belt, and the conveyor belt passes on the troughs. A large number of air outlets are formed at bottom portions of the troughs, and air supply headers (air ducts) extending along the troughs are provided so as to cover the air outlets from below. Air pressure-fed to the air supply headers flows out through the air outlets to between the conveyor belt and each trough to make the conveyor belt float.

JP 2001088923 A discloses an air floating belt conveyor apparatus wherein an exhaust circulating space in a carrier side trough is divided in the longitudinal direction thereof by a pass partition plate to form a block, and a connecting duct is mounted between the block of the exhaust circulating space in the carrier side trough and an exhaust circulating space in a return side through for letting the exhaust in the block flow to the exhaust circulating space in the return side trough, and the exhaust gas from the block in the carrier side trough is exhausted to the outside through the return side trough.

JP 2001294313 A discloses an air floating belt conveyor apparatus wherein dust is blown in the space on a return path side and is guided to a dust collecting duct through an exhaust hole, wherein if dust is sucked in the dust collecting duct at a speed at which the dust does not settle, the dust can be removed without accumulating.

### Citation List

### Patent Literature

PTL 1: JP H11 11642 A discloses an air floating belt conveyor apparatus comprising: - a conveyor main body including an endless conveyor belt and configured to convey conveyed materials, placed on a conveyance surface of the conveyor belt, in a predetermined direction;- a carrier route belt supporting body supporting a carrier route portion of the conveyor belt from below and including a plurality of air outlets through which air for making the conveyor belt float flows out to between an upper surface of the carrier route belt supporting body and a non-conveyance surface of the conveyor belt;- at least one air supply header including a header chamber communicating with the plurality of air outlets, the at least one air supply header being provided at a lower portion of the carrier route belt supporting body; and- a blower configured to supply the air to the air supply header, - wherein the air supply header includes: an air supply port through which the air supplied from the blower is introduced to the header chamber;- a discharge port, provided at one or each of both longitudinal direction end portions of the air supply header, dust accumulated in the header chamber being discharged through the discharge port together with the air; and an opening/closing device configured to open and close the discharge port. The air floating belt conveyor apparatus also comprises a belt inversion mechanism configured to invert the conveyor belt such that the conveyance surface of the conveyor belt passing through the return route belt supporting body faces upward.

### Summary of Invention

### Technical Problem

Accumulation of dust in the air supply header of the air floating belt conveyor apparatus which was installed several years ago has been noticed.

However, skilled persons commonly recognize that since a gap between the floating conveyor belt and the trough is very small, and the air flows out from the gap, the dust of the conveyed materials hardly gets into the air supply header through between the conveyor belt and the trough. Therefore, the conventional air floating belt conveyor apparatus does not have means for removing the dust accumulated inside the air supply header.

The present invention was made in view of the above circumstances, and an object of the present invention is to provide an air floating belt conveyor apparatus including means for removing dust accumulated inside an air supply header.

### Solution to Problem

According to a first aspect of the invention, there is provided an air floating belt conveyor apparatus according to claim 1.

In the above air floating belt conveyor apparatus, by opening the discharge port of the air supply header and supplying the air from the air supply port to the header chamber, the dust accumulated in the header chamber is discharged from the discharge port together with the air. To be specific, the air floating belt conveyor apparatus includes means for removing the dust accumulated in the air supply header (header chamber).

The air floating belt conveyor apparatus may further include a cleaner configured to remove, from the conveyor belt, the dust which has fallen on the return route portion of the conveyor belt.

With this, the dust which has fallen on the conveyance surface of the return route portion of the conveyor belt is removed by the cleaner.

### Advantageous Effects of Invention

The present invention can provide an air floating belt conveyor apparatus including means for removing dust accumulated in an air supply header (header chamber).

### Brief Description of Drawings

Fig. 1 is a schematic diagram of an air floating belt conveyor apparatus according to one embodiment of the present invention.
Fig. 2 is a schematic diagram showing a cross section of the air floating belt conveyor apparatus, the cross section being perpendicular to a conveyance direction of conveyed materials.
Fig. 3 is a schematic diagram showing a cross section of a carrier route trough and an air supply header, the cross section being parallel to the conveyance direction of the conveyed materials.
Fig. 4 shows a modified example of the air supply header and is a schematic diagram showing a cross section of the carrier route trough and the air supply header, the cross section being parallel to the conveyance direction of the conveyed materials.

### Description of Embodiments

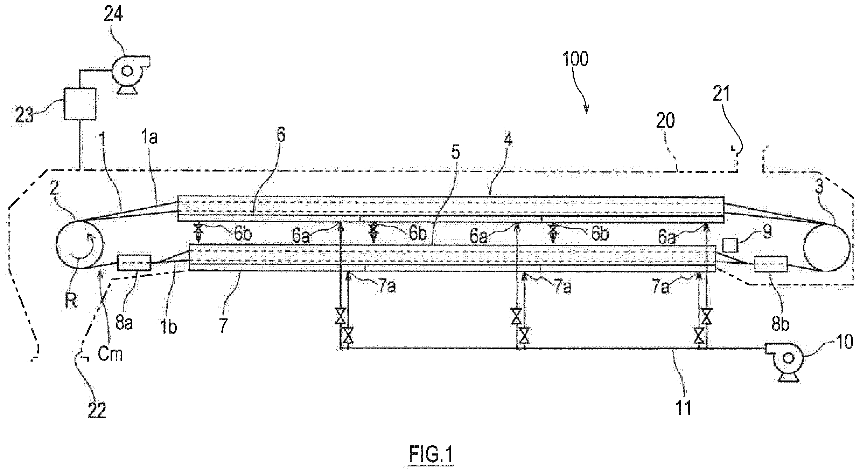

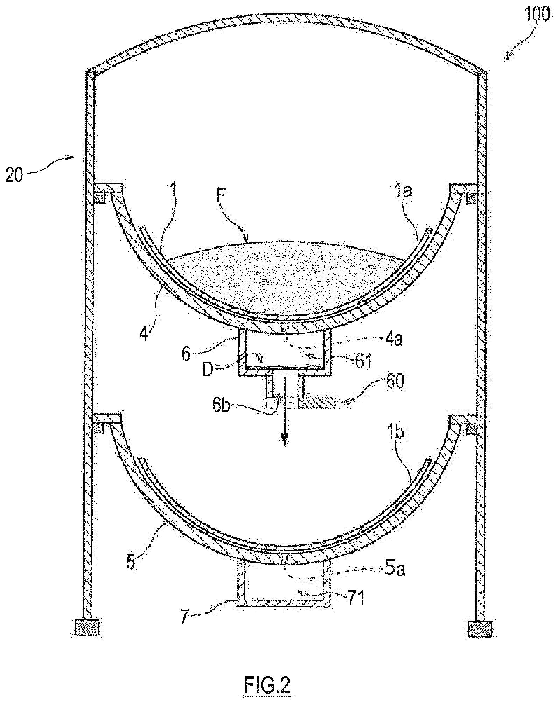

Next, an embodiment of the present invention will be explained with reference to the drawings. Fig. 1 is a schematic diagram of an air floating belt conveyor apparatus 100 according to one embodiment of the present invention. Fig. 2 is a schematic diagram showing a cross section of the air floating belt conveyor apparatus 100, the cross section being perpendicular to a conveyance direction of conveyed materials F. In Fig. 1, a casing 20 is transparent, and an internal structure of the air floating belt conveyor apparatus 100 is shown.

As shown in Figs. 1 and 2, the air floating belt conveyor apparatus 100 includes a conveyor main body Cm, a carrier route belt supporting body (hereinafter referred to as a "carrier route trough 4"), a return route belt supporting body (hereinafter referred to as a "return route trough 5"), air supply headers 6 and 7, and a blower 10. The air supply headers 6 are provided at the carrier route trough 4, and the air supply headers 7 are provided at the return route trough 5. The blower 10 pressure-feeds air to the air supply headers 6 and 7.

The conveyor main body Cm is constituted by an endless conveyor belt 1, a driving pulley 2, a driven pulley 3, a motor (not shown), and the like. The conveyor belt 1 is wound between the driving pulley 2 as a head pulley and the driven pulley 3 as a tail pulley. The driving pulley 2 is rotated by a motor (not shown) in a direction shown by an arrow R.

The carrier route trough 4 supporting a carrier route portion 1a of the conveyor belt 1 from below and the return route trough 5 supporting a return route portion 1b of the conveyor belt 1 from below are provided between the driving pulley 2 and the driven pulley 3. The return route trough 5 is provided under the carrier route trough 4.

A first belt inversion mechanism 8a configured to invert the belt by 180 degrees is provided between one of longitudinal direction end portions of the return route trough 5 and the driving pulley 2, and a second belt inversion mechanism 8b configured to invert the belt by 180 degrees is provided between the other longitudinal direction end portion of the return route trough 5 and the driven pulley 3. The first belt inversion mechanism 8a is provided at a movement direction upstream portion of the return route portion 1b of the conveyor belt 1 and inverts the conveyor belt 1 from a state where a conveyance surface (surface on which the conveyed materials F are placed) of the conveyor belt 1 faces downward to a state where the conveyance surface faces upward. The second belt inversion mechanism 8b is provided at a movement direction downstream portion of the return route portion 1b of the conveyor belt 1 and inverts the conveyor belt 1 from a state where the conveyance surface faces upward to a state where the conveyance surface faces downward. Each of the first and second belt inversion mechanisms 8a and 8b may be constituted by a plurality of rollers configured to twist the conveyor belt 1 to invert the conveyor belt 1.

A cleaner 9 is provided between the longitudinal direction end portion of the return route trough 5 and the second belt inversion mechanism 8b. The cleaner 9 removes, from the conveyor belt 1, the dust and the like accumulated on (or adhered to) the conveyance surface of the conveyor belt 1 having passed through the return route trough 5. As the cleaner 9, a blower that blows off the dust, a suction machine that suctions the dust, a shower that washes the dust away, a brush that sweeps out the dust, or the like is adopted depending on the property of the dust.

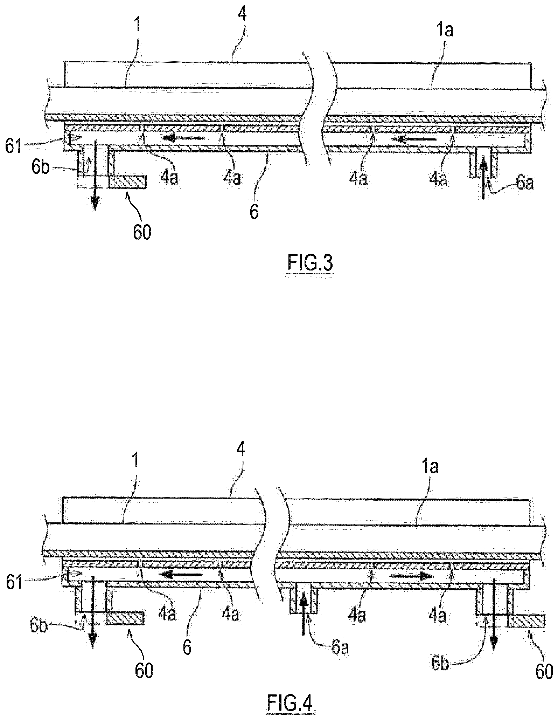

Fig. 3 is a schematic diagram showing a cross section of the carrier route trough 4 and the air supply header 6, the cross section being parallel to the conveyance direction of the conveyed materials F. As shown in Figs. 2 and 3, a cross section of the carrier route trough 4 has a substantially lower semi-circular arc shape. Further, the carrier route trough 4 has a gutter shape extending in parallel with the conveyance direction of the conveyed materials conveyed by the carrier route portion 1a of the conveyor belt 1. Air outlets 4a are provided at a bottom portion of the carrier route trough 4 so as to be line up in a longitudinal direction of the carrier route trough 4 at a predetermined pitch.

The air supply header 6 is provided at a lower portion of the carrier route trough 4 so as to extend along the longitudinal direction of the carrier route trough 4. At least one air supply header 6 is provided for one carrier route trough 4. In the present embodiment, a plurality of air supply headers 6 are provided in series. A header chamber 61 communicating with the air outlets 4a is formed inside each air supply header 6.

An air supply port 6a is provided at the air supply header 6. The air pressure-fed from the blower 10 is introduced to the header chamber 61 through the air supply port 6a. The air supply port 6a and the blower 10 are connected to each other through a pipe 11 and the like. In the carrier route trough 4 according to the present embodiment, the air supply port 6a is provided at the lower portion of the carrier route trough 4 and is open downward. However, the position of the air supply port 6a is not limited to the present embodiment.

Further, a discharge port 6b is provided at a longitudinal direction end portion of the air supply header 6. The discharge port 6b is desired to be provided at a position away from the air supply port 6a in the longitudinal direction of the air supply header 6. The discharge port 6b is provided at the bottom portion of the air supply header 6 and is open downward or laterally. An opening area of the discharge port 6b is adequately larger than an opening area of each air outlet 4a.

An opening/closing device 60 configured to open and close the discharge port 6b is provided at the discharge port 6b. The opening/closing device 60 is not limited as long as it is a device, such as a lid, a slide shutter, or a valve, configured to switch open and close of the discharge port 6b. The opening/closing device 60 may be an automatic device or a manual device. It should be noted that the opening/closing device 60 is desired to include a structure capable of hermetically sealing the discharge port 6b when the opening/closing device 60 closes the discharge port 6b.

A cross section of the return route trough 5 has a substantially lower semi-circular arc shape. Further, the return route trough 5 has a gutter shape extending in parallel with the conveyance direction of the conveyed materials F conveyed by the return route portion 1b of the conveyor belt 1. Air outlets 5a are provided at a bottom portion of the return route trough 5 so as to be lined up in a longitudinal direction of the return route trough 5 at a predetermined pitch. To be specific, the return route trough 5 is substantially the same in configuration as the carrier route trough 4.

The air supply header 7 is provided at a lower portion of the return route trough 5 so as to extend along the longitudinal direction of the return route trough 5. A plurality of air supply headers 7 lined up in series may be provided for one return route trough 5. A header chamber 71 communicating with the air outlets 5a is formed inside each air supply header 7.

An air supply port 7a is provided at the air supply header 7. The air pressure-fed from the blower 10 is introduced to the header chamber 71 through the air supply port 7a. The air supply port 7a and the blower 10 are connected to each other by the pipe 11 and the like. The air supply header 7 is substantially the same in configuration as the air supply header 6 except that the discharge port 6b is not provided at the air supply header 7.

The conveyor main body Cm, the carrier route trough 4, the return route trough 5, and the air supply headers 6 and 7 are accommodated in the casing 20. An inlet 21 for the conveyed materials F to be supplied to the conveyor belt 1 and an outlet 22 for the conveyed materials F having been conveyed by the conveyor belt 1 are provided at the casing 20. A dust collecting fan 24 is connected to the casing 20 through a bag filter 23.

One example of an operation of the air floating belt conveyor apparatus 100 will be explained.

First, the blower 10 and the dust collecting fan 24 are driven. The air pressure-fed from the blower 10 through the pipe 11 to the header chambers 61 of the air supply headers 6 flows out through the air outlets 4a to between an upper surface of the carrier route trough 4 and a non-conveyance surface of the carrier route portion 1a of the conveyor belt 1 to make the conveyor belt 1 float. Similarly, the air pressure-fed from the blower 10 through the pipe 11 to the header chambers 71 of the air supply headers 7 flows out through the air outlets 5a to between an upper surface of the return route trough 5 and a non-conveyance surface of the return route portion 1b of the conveyor belt 1 to make the conveyor belt 1 float.

Next, a motor of the conveyor main body Cm is driven, and the driving pulley 2 is rotated in the direction shown by the arrow R. The conveyor belt 1 rotates between the driving pulley 2 and the driven pulley 3 by the rotation of the driving pulley 2. The conveyor belt 1 conveys the conveyed materials F, supplied from the inlet 21, toward the driving pulley 2 and discharges the conveyed materials F from the outlet 22. The dust generated from the conveyed materials F which are being conveyed by the conveyor belt 1 is collected by the bag filter 23 by forced discharge in the casing 20 by the dust collecting fan 24.

When stopping the air floating belt conveyor apparatus 100, the motor of the conveyor main body Cm is stopped, and the driving of the blower 10 and the dust collecting fan 24 is stopped. With this, the dust flying in the casing 20 settles. Most of the dust falls on the conveyor belt 1, but some of the dust falls on the upper surface of the carrier route trough 4. Part of the dust which has fallen on the upper surface of the carrier route trough 4 passes through between the conveyor belt 1 and the upper surface of the carrier route trough 4 and then through the air outlets 4a to fall into the header chambers 61 of the air supply headers 6. Thus, dust D is accumulated in the header chambers 61 although the amount of dust getting into the header chambers 61 is small.

Therefore, the header chambers 61 are cleaned on a regular basis, i.e., for every relatively-long period, such as every year to every several years, and with this, the dust D accumulated in the header chambers 61 is removed. Specifically, when the air floating belt conveyor apparatus 100 is in a stop state, the opening/closing devices 60 of the air supply headers 6 are operated to open the discharge ports 6b, and the blower 10 is driven to pressure-feed the air to the header chambers 61 of the air supply headers 6. It is desirable that: a valve configured to switch between the supply of the air to the air supply port 6a and the stop of the supply of the air to the air supply port 6a is provided at the pipe 11 connecting the air supply port 6a of the air supply header 6 and the blower 10; a valve configured to switch between the supply of the air to the air supply port 7a and the stop of the supply of the air to the air supply port 7a is provided at the pipe 11 connecting the air supply port 7a of the air supply header 7 and the blower 10; and the air is selectively supplied to the air supply header 6 to be cleaned.

The opening area of the discharge port 6b is adequately larger than the opening area of each air outlet 4a. Therefore, the air flowing through the air supply port 6a into the header chamber 61 flows to the discharge port 6b. By this flow of the air, the dust D accumulated in the header chamber 61 flies, and the flying dust D is discharged from the discharge port 6b in accordance with the flow of the air.

The dust discharged from the discharge port 6b falls on the return route portion 1b of the conveyor belt 1. The dust which has fallen on the return route portion 1b of the conveyor belt 1 is removed from the conveyor belt 1 by the cleaner 9 when the conveyor belt 1 is rotated next time.

As described above, the air floating belt conveyor apparatus 100 of the present embodiment includes: the conveyor main body Cm including the endless conveyor belt 1 and configured to convey the conveyed materials F, placed on the conveyance surface of the conveyor belt 1, in a predetermined direction; the carrier route trough 4 (carrier route belt supporting body) supporting the carrier route portion 1a of the conveyor belt 1 from below and including a plurality of air outlets 4a through which the air for making the conveyor belt 1 float flows out to between the upper surface of the carrier route trough 4 and the non-conveyance surface of the conveyor belt 1; at least one air supply header 6 including the header chamber 61 communicating with the plurality of air outlets 4a, the at least one air supply header 6 being provided at a lower portion of the carrier route trough 4; and the blower 10 configured to supply the air to the air supply header 6. The air supply header 6 includes: the air supply port 6a through which the air supplied from the blower 10 is introduced to the header chamber 61; the discharge port 6b provided at the longitudinal direction end portion of the air supply header 6, the dust D accumulated in the header chamber 61 being discharged through the discharge port 6b together with the air; and the opening/closing device 60 configured to open and close the discharge port 6b.

According to the above configuration, by opening the discharge port 6b of the air supply header 6 and supplying the air from the air supply port 6a to the header chamber 61, the dust D accumulated in the header chamber 61 is discharged from the discharge port 6b together with the air. As above, the air floating belt conveyor apparatus 100 according to the present embodiment includes means for removing the dust D accumulated in the air supply header 6 (header chamber 61).

The air floating belt conveyor apparatus 100 of the present embodiment includes: the return route trough 5 (return route belt supporting body) located under the discharge port 6b of the air supply header 6 and supporting the return route portion 1b of the conveyor belt 1; and the belt inversion mechanisms 8a and 8b configured to invert the conveyor belt 1 such that the conveyance surface of the conveyor belt 1 passing through the return route trough 5 faces upward.

With this, the dust discharged from the discharge port 6b of the air supply header 6 falls on the conveyance surface of the return route portion 1b of the conveyor belt 1. Therefore, the non-conveyance surface of the conveyor belt 1 is not contaminated by the dust. Further, in a case where the below-described cleaner 9 is not included, the dust which has fallen on the conveyance surface at the return route portion 1b of the conveyor belt 1 can be made to fall from the conveyance surface when the belt is inverted by the belt inversion mechanism 8b located downstream of the return route trough 5 in the belt conveyance direction.

The air floating belt conveyor apparatus 100 of the present embodiment further includes the cleaner 9 configured to remove, from the conveyor belt 1, the dust which has fallen on the return route portion 1b of the conveyor belt 1.

With this, the dust which has fallen on the conveyance surface at the return route portion 1b of the conveyor belt 1 is removed by the cleaner 9.

The foregoing has explained a preferred embodiment of the present invention. The structures and/or functional details may be substantially modified within the scope of the present invention defined by the appended claims.

For example, the above configuration may be modified as below.

For example, in the above embodiment, the discharge port 6b is provided at one longitudinal direction end portion of the air supply header 6. However, as shown in Fig. 4, the discharge ports 6b may be provided at both respective longitudinal direction end portions of the air supply header 6. To be specific, a plurality of discharge ports 6b may be provided along the longitudinal direction of the air supply header 6. As above, the number of discharge ports 6b provided at the air supply header 6 and the positions of the discharge ports 6b are not limited to the above embodiment.

### Reference Signs List

1 conveyor belt
1a carrier route portion
1b return route portion
2 driving pulley
3 driven pulley
4 carrier route trough (carrier route belt supporting body)
4a air outlet
5 return route trough (return route belt supporting body)
5a air outlet
6 air supply header
6a air supply port
6b discharge port
7 air supply header
7a air supply port
8a, 8b belt inversion mechanism
9 cleaner
10 blower
20 casing
21 inlet
22 outlet
23 bag filter
24 dust collecting fan
60 opening/closing device
61, 71 header chamber
100 air floating belt conveyor apparatus
Cm conveyor main body
F conveyed material
D (accumulated) dust

## Claims

1. An air floating belt conveyor apparatus (100) comprising:
a conveyor main body (Cm) including an endless conveyor belt (1) and configured to convey conveyed materials (F), placed on a conveyance surface of the conveyor belt (1), in a predetermined direction;
a carrier route belt supporting body (4) supporting a carrier route portion (1a) of the conveyor belt (1) from below and including a plurality of air outlets (4a) through which air for making the conveyor belt (1) float flows out to between an upper surface of the carrier route belt supporting body (4) and a non-conveyance surface of the conveyor belt (1);
at least one air supply header (6) including a header chamber (61) communicating with the plurality of air outlets (4a), the at least one air supply header (6) being provided at a lower portion of the carrier route belt supporting body (4); and
a blower (10) configured to supply the air to the air supply header, wherein
the air supply header (6) includes:
an air supply port (6a) through which the air supplied from the blower (10) is introduced to the header chamber (61);
a discharge port (6b) provided at one or each of both longitudinal direction end portions of the air supply header (6), and
an opening/closing device (60) configured to open and close the discharge port (6b), wherein the air floating belt conveyor apparatus (100) further comprises:
a return route belt supporting body (5) located under the discharge port and supporting a return route portion of the conveyor belt (1);
a belt inversion mechanism (8a) configured to invert the conveyor belt (1) such that the conveyance surface of the conveyor belt (1) passing through the return route belt supporting body (5) faces upward; and wherein
the dust (D) accumulated in the header chamber (61) being discharged through the discharge port (6b) together with the air falls on the conveyance surface of the return route portion (1b) of the conveyor belt (1).

2. The air floating belt conveyor apparatus (100) according to claim 1, further comprising a cleaner (9) configured to remove, from the conveyor belt (1), the dust (D) which has fallen on the return route portion (1b) of the conveyor belt (1).

## Patentansprüche

1. Schwebende Bandfördereinrichtung (100), umfassend:
einen Förderer-Hauptkörper (Cm), der ein endloses Förderband (1) enthält und so konfiguriert ist, dass er Fördergut (F), das auf einer Förderfläche des Förderbandes (1) platziert ist, in eine vorbestimmte Richtung fördert;
einen Tragkörper für eine Transportstrecke (4), die einen Transportstreckenabschnitt (1a) des Förderbandes (1) von unten trägt und eine Vielzahl von Luftauslässen (4a) enthält, durch die Luft, die das Förderband (1) zum Schweben bringt, zwischen einer oberen Fläche des Tragkörpers für die Transportstrecke (4) und einer Nicht-Förderfläche des Förderbandes (1) ausströmt;
mindestens ein Luftzufuhrkopf (6), der eine Kopfkammer (61) enthält, die mit der Vielzahl von Luftauslässen (4a) in Verbindung steht, wobei der mindestens eine Luftzufuhrkopf (6) an einem unteren Abschnitt des Tragkörpers für die Transportstrecke (4) bereitgestellt ist; und
ein Gebläse (10), das so konfiguriert ist, dass es die Luft an den Luftzufuhrkopf zuführt, wobei
der Luftzufuhrkopf (6) Folgendes enthält:
eine Luftzufuhröffnung (6a), durch die die vom Gebläse (10) zugeführte Luft in die Kopfkammer (61) eingeleitet wird;
eine Auslassöffnung (6b), die an einem oder jedem der beiden Längsrichtungs-Endabschnitte des Luftzufuhrkopfes (6) bereitgestelt ist, und
eine Öffnungs-/Schließvorrichtung (60), die so konfiguriert ist, dass sie die Auslassöffnung (6b) öffnet und schließt, wobei die schwebende Bandfördereinrichtung (100) weiter umfasst:
einen Tragkörper für eine Rückführstrecke (5), der unter der Auslassöffnung angeordnet ist und einen Rückführstreckenabschnitt des Förderbandes (1) trägt;
einen Bandumkehrmechanismus (8a), der so konfiguriert ist, dass er das Förderband (1) umkehrt, so dass die Förderfläche des Förderbandes (1), die durch den Tragkörper für eine Rückführstrecke (5) läuft, nach oben zeigt; und
wobei
der in der Kopfkammer (61) angesammelte Staub (D) durch die Auslassöffnung (6b) zusammen mit der Luft auf die Förderfläche des Rückführstreckenabschnitts (1b) des Förderbandes (1) fällt.

2. Schwebende Bandfördereinrichtung (100) nach Anspruch 1, weiter umfassend einen Reiniger (9), der so konfiguriert ist, dass er den Staub (D), der auf den Rückführstreckenabschnitt (1b) des Förderbandes (1) gefallen ist, vom Förderband (1) entfernt.

## Revendications

1. Appareil transporteur à courroie à flottement pneumatique (100) comprenant :
un corps principal de transporteur (Cm) incluant une courroie transporteuse sans fin (1) et configuré pour transporter des matériaux transportés (F) placés sur une surface de transport de la courroie transporteuse (1) dans une direction prédéterminée ;
un corps de support de courroie d'itinéraire de transporteur (4) supportant une partie itinéraire de transporteur (1a) de la courroie transporteuse (1) depuis le dessous et incluant une pluralité de sorties d'air (4a) par lesquelles de l'air destiné à faire flotter la courroie transporteuse (1) s'écoule entre une surface supérieure du corps de support de courroie d'itinéraire de transporteur (4) et une surface de non-transport de la courroie transporteuse (1) ;
au moins un collecteur d'alimentation en air (6) incluant une chambre de collecteur (61) communiquant avec la pluralité de sorties d'air (4a), ledit au moins un collecteur d'alimentation en air (6) étant placé au niveau d'une partie inférieure du corps de support de courroie d'itinéraire de transporteur (4) ; et
un ventilateur (10) configuré pour alimenter en air le collecteur d'alimentation en air, dans lequel
le collecteur d'alimentation en air (6) inclut :
un port d'alimentation en air (6a) par lequel l'air fourni depuis le ventilateur (10) est introduit dans la chambre de collecteur (61) ;
un port d'évacuation (6b) prévu au niveau d'une ou de chacune des deux parties d'extrémité dans la direction longitudinale du collecteur d'alimentation en air (6), et
un dispositif d'ouverture/fermeture (60) configuré pour ouvrir et fermer le port d'évacuation (6b), dans lequel l'appareil transporteur à courroie à flottement pneumatique (100) comprend en outre :
un corps de support de courroie d'itinéraire de retour (5) situé sous le port d'évacuation et supportant une partie itinéraire de retour de la courroie transporteuse (1) ;
un mécanisme d'inversion de courroie (8a) configuré pour inverser la courroie transporteuse (1) de telle sorte que la surface de transport de la courroie transporteuse (1) passant par le corps de support de courroie d'itinéraire de retour (5) est orientée vers le haut ; et
dans lequel
la poussière (D) accumulée dans la chambre de collecteur (61) évacuée par le port d'évacuation (6b) avec l'air tombe sur la surface de transport de la partie itinéraire de retour (1b) de la courroie transporteuse (1).

2. Appareil transporteur à courroie à flottement pneumatique (100) selon la revendication 1, comprenant en outre un dispositif de nettoyage (9) configuré pour éliminer de la courroie transporteuse (1) la poussière (D) qui est tombée sur la partie itinéraire de retour (1b) de la courroie transporteuse (1).
